# EUROPEAN PATENT APPLICATION

(11) **EP 1 170 924 A2**
(43) Date of publication of application: **09.01.2002**
(21) Application number: 01116051.2
(22) Date of filing: 02.07.2001
(51) Int. Cl.: H04L 29/06, G06T 1/00

(54) **Data display method and system**

(30) Priority: 03.07.2000 JP 2000205560
(71) Applicant: Hitachi, Ltd., Chiyoda-ku, Tokyo 101-8010 (JP)
(72) Inventor: Tsuchiyama, Chikako, c/o Hitachi,Ltd, I.P.G., Chiyoda-ku, Tokyo 100-8220 (JP); Toyoshima, Hisashi, c/o Hitachi,Ltd. I.P.G., Chiyoda-ku, Tokyo 100-8220 (JP)
(74) Representative: Strehl Schübel-Hopf & Partner

(57) **Abstract**

Multimedia data having, embedded therein by using electronic watermark technique, data that includes first information to be disclosed, and second information for controlling the data to be disclosed is received by a data terminal via a communication network. The data terminal compares the second information included in the received multimedia data with the condition on the data terminal side. At least part of the multimedia data or first information is not displayed or is made illegible on the data terminal according to a result of the comparison of the second information. The multimedia data or the first information is displayed on the data terminal according to another result of the comparison of the second information.

## Description

### BACKGROUND OF THE INVENTION

The present invention relates to data display technologies, and particularly to a display technology that, when data received via a communication network is displayed, can make at least part of the contents of the data invisible or illegible.

In recent years, a WWW system has become widespread that uses the World Wide Web (WWW) server program and browser system as means for disclosing/ transmitting information to a plurality of users via a network such as Internet. Particularly nowadays, there is a strong trend to use the WWW system not only as the information transmitting means but also for business. As a typical example of the application to business, the so-called e-commerce system can be given for putting commercial products information on view by use of the WWW system.

In this situation, it becomes important to use a technology capable of verifying the reliability of the disclosed/transmitted information on the network. For example, JP-A-11-239129 (hereinafter, referred to as "known example 1") assigned to the same assignee as that of this application discloses an information certifying method in which someone who wants information to be disclosed/transmitted (hereinafter, referred to as "exhibitor") prepares a mark that is given information for confirmation of its authenticity and expiration date by means of electronic watermark, and attaches it to the information wanted to be disclosed/transmitted, while the user (hereinafter, also referred to as "reader") received that information confirms the authenticity of the information with the mark attached by use of the mark.

It is also important to contrive in order that the exhibited commercial goods can be read by more readers. For example, "banner advertisement" becomes popular, in which displayed goods-title images, or links provided on a site where commodity information is put on view (banners) are reported on other sites such as portal site (hereinafter, also referred to as "handler"). The "banner advertisement" is generally the advertisement of images like banners attached to the pages of on-line media for reporting net ads, which the user clicks to enter a particular site.

The method according to the known example 1 is to display information wanted to be disclosed/ transmitted, and for example attach, to the information, a mark given information for authenticity confirmation. Therefore, when the exhibitor not only displays information on its own site, but also requests a large number of handlers such as portal sites and knowledgeable people's sites to put his information on view in their sites in order that his information can be read by more readers, it is necessary for the handler to make sure of space for displaying the information and make layout adjustment. In addition, this method needs to provide, for example, a password for handler's checking of expiration and management of access in order to control information displaying in accordance with the expiration date and access right of reader, and thus it imposes a considerable burden on the handler who executes the method.

On the other hand, "banner advertisement" is desired to be improved in convenience and reliability because there are problems like the facts that the reader dislikes taking a side trip to other sites by clicking banner advertisements and that the closed campaign advertisement is still running on the network. That is, the space acquirement problem on the handler side can be solved, but the problem with the convenience on the reader side and the problem of the running burden on the handler about the information display control cannot be solved by simply combining the known example 1 and the conventional "banner advertisement" and attaching banner ads links on the site of the handler put on view according to the known example 1.

### SUMMARY OF THE INVENTION

Accordingly, it is an object of the invention to provide a display method and system for controlling display of data while maintaining reliability of the data.

In order to achieve the above object, according to the invention, there is provided a data display method in which multimedia data having data embedded, such elements as to symbolize the embedded data, information for reliability confirmation and information for display control is used to confirm if the multimedia data and the data have much credibility, and to control the contents of the multimedia data and the data to be displayed. Here, it is assumed that the information for reliability confirmation is the information for use in checking the authenticity and the presence or absence of tamper.

That is, according to the invention, when there are an exhibitor, a handler and a reader, multimedia data (also, referred to as second multimedia data) is managed by a manager in which the three exhibitor, handler and reader have trust, and it has embedded therein information (also, referred to as first multimedia data) that the exhibitor wants to disclose/transmit. In addition, this second multimedia data has such elements as to symbolize the contents of the first multimedia data, and has visually and aurally confirmable property, and information for authenticity confirmation. This second multimedia data is displayed by the handler. The reader can check if the second multimedia data has authenticity, and read the contents of the second multimedia.

More specifically, according to the invention, image data called mark is used that has a design including such title and keywords as to symbolize the information that the exhibitor wants to disclose, for example, brand name and service name, and has information for authenticity confirmation. In addition, information itself being disclosed or its outline information is embedded in this mark. This mark with such information embedded (hereinafter, also referred to as "package-mark" is displayed in one or a plurality of handler sites such as index site and news site. The reader can confirm if this package-mark has the authenticity that it is surely of the reliable package-mark manager, and check if the information embedded in the package-mark is certainly from the exhibitor. Also, the reader can read the information embedded in the package-mark without taking a side trip from the currently reading site to the exhibitor's site and with no communication load. Therefore, the exhibitor can have more readers read the information that the exhibitor wants to disclose in a highly reliable state.

In addition, according to the invention, when the first multimedia data that the exhibitor wants to disclose is embedded in the second multimedia data, the expiration date information and access condition information can also be embedded. If the first multimedia data is decided to be within the expiration date or if the reader is decided to have the access right, the second multimedia data is displayed or the first multimedia data is displayed. In other words, if the first multimedia data is over the expiration date, or if the reader does not have access right, the second multimedia data is not displayed or the first multimedia data is not displayed. Thus, the information can be controlled to display or not to display.

Specifically, according to the invention, when the information to be embedded in the package-mark has an expiration date as does the event or sale information, this expiration date information is also embedded in the package-mark. When the reader tries to read the information that expired, the displaying of information can be controlled so that this package-mark itself is not displayed or the information within this package-mark is not displayed. In addition, according to the invention, when an individual who is hunting for a job wants to disclose his private information such as career and contact address and wants persons in charge of personal administration of recruiting firms to read, but does not want the other persons to read, or when such individual wants to restrict the access, information for the access control is embedded in the package-mark. When a reader having no access right tries to read, the information embedded in the package-mark is not displayed or is made illegible. Thus, the information display control can be made.

Moreover, according to the present invention, when the first multimedia data is embedded in the second multimedia data, the whereabouts information of the detailed information and related information of the first multimedia data is embedded in the second multimedia data, so that the reader can read the related information and detailed information of the first multimedia data.

Specifically, according to the invention, when the information that the exhibitor wants to disclose is embedded in the package-mark, the link information in the exhibitor's site in which the detailed information and related information of the information wanted to be disclosed are displayed, and the link information in the mark manager site where the information about the package-mark can be confirmed are embedded in the package-mark, so that the reader can read the outline information having much credibility, and acquire necessary related information.

### BRIEF DESCRIPTION OF THE DRAWINGS

Figure 1 is a diagram schematically showing the construction of a display system for goods information or the like as an embodiment of the invention.
Figure 2 is a diagram schematically showing the construction of the package-mark management server 101 in the embodiment of the invention shown in FIG. 1.
Figure 3 is a diagram schematically showing the construction of the package-mark manager WWW server 102 in the embodiment of the invention shown in FIG. 1.
Figure 4 is a diagram schematically showing the construction of the information handler server 121 in the embodiment of the invention shown in FIG. 1.
Figure 5 is a diagram schematically showing the construction of the information reader terminal 131 in the embodiment of the invention shown in FIG. 1.
Figure 6 is a diagram showing an example of data of the package-mark management DB209 in the embodiment of the invention shown in FIG. 1.
Figure 7 is a diagram showing an example of data of the package-mark log management DB210 in the embodiment of the invention shown in FIG. 1.
Figure 8 is a diagram showing an example of data of information embedded in the package-mark in the embodiment of the invention shown in FIG. 1.
Figure 9 is a diagram showing an example of data of the package-mark reference plug-in DB311 in the embodiment of the invention shown in FIG. 1.
Figure 10 is a diagram showing an example of data of public key DB312 in the embodiment of the invention shown in FIG. 1.
Figure 11 is a flowchart showing the procedure of the package-mark registration/attachment processing in the embodiment of the invention shown in FIG. 1.
Figures 12A and 12B are flowcharts of the package-mark reference processing in the embodiment of the invention shown in FIG. 1.
Figure 13 shows an example of the package-mark image in the embodiment of the invention shown in FIG. 1.
Figure 14 is a flowchart showing the processing procedure in the case where no package-mark reference processor 506c is provided in the information reader terminal 131 of the embodiment of the invention shown in FIG. 1.
Figure 15 is a diagram schematically showing the display system for job offer and job seeking information as another embodiment of the invention.
Figure 16 shows an example of the package-mark image in the embodiment of the invention shown in FIG. 15.
Figure 17 is a flowchart showing the procedure of the package-mark attachment processing of the display system for information having vendibility as another embodiment of the invention.
Figure 18 shows an example of the point package-mark image in the embodiment of the invention shown in FIG. 17.
Figure 19 is a diagram schematically showing the construction of the display system for the case where the reader 130 doubles as the handler 120 and exhibitor 110 as another embodiment of the invention.
Figure 20 is a flowchart showing the procedure of the package-mark display processing in the embodiment of the invention shown in FIG. 19.
Figure 21 is a diagram showing an example of data of information embedded in the package-mark in the embodiment of the invention shown in FIG. 19.
Figure 22 is a diagram schematically showing the construction of the display system for the data from mobile terminals as another embodiment of the invention.
Figure 23 is a diagram showing an example of the display system for many types of information over a plurality of sites and servers as another embodiment of the invention.

### DESCRIPTION OF THE EMBODIMENTS

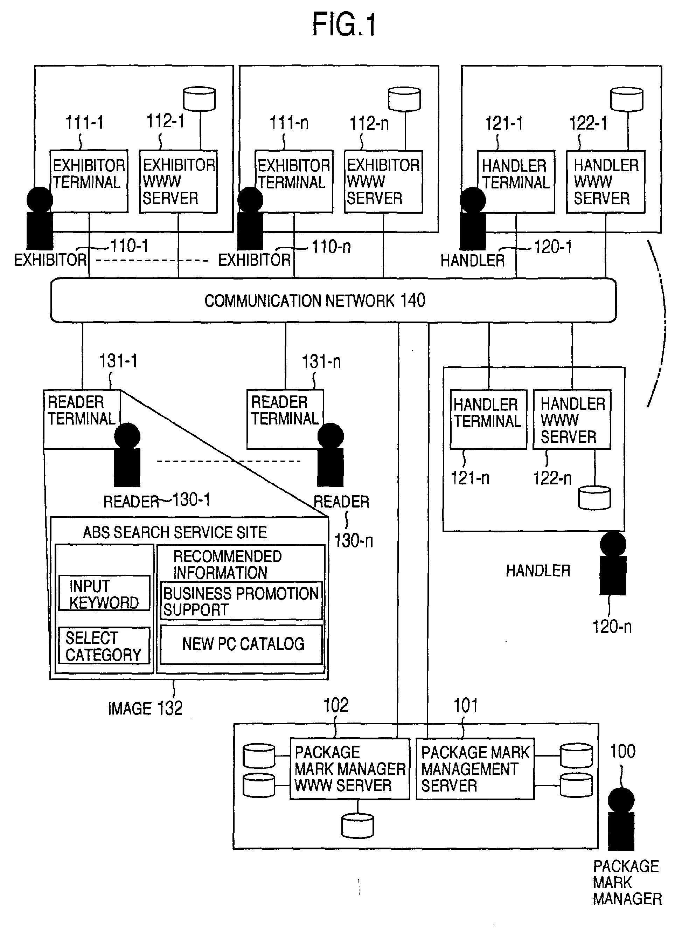

Embodiments of the invention will be described with reference to the accompanying drawings. First, an embodiment of the display system for goods information will be mentioned in detail with reference to FIG. 1. In the following figures, like elements are identified by the same reference numerals, and do not limit the invention. Also, the present invention is not limited to the Internet and Intranet.

### Display system for goods information

FIG. 1 schematically shows the construction of an information display system of the invention. The information display system of this embodiment is used by a package-mark manager 100 for making management and generation of package-mark, exhibitors 110-1-110-n who want to exhibit/transmit some information (hereinafter, simply referred as exhibitor 110), handlers 120-1~120-n who present Web pages (hereinafter, simply referred to as handler 120), and readers 130-1~130-n who read/use the Web pages (hereinafter, simply referred to as reader 130). As illustrated in FIG. 1, the display system is constructed by connecting a package-mark management server 101, a package-mark manager WWW server 102, exhibitor terminals 111-1∼111-n (hereinafter, simply referred to as exhibitor terminal 111), exhibitor WWW servers 112-1~112-n (hereinafter, simply referred to as exhibitor server 112), handler terminals 121-1~121-n (hereinafter, simply referred to as handler terminal 121), handler WWW servers 122-1~122-n (hereinafter, simply referred to as handler server 122), and reader terminals 131-1~131-n (hereinafter, simply referred to as reader terminal 131) via a communication network 140 such as Intranet or Internet. Here, the package-mark is the image mark that has embedded therein the contents of information which the exhibitor 110 wants to exhibit/transmit, and that has elements which symbolically express the embedded contents of information. This mark is the mark having the information from which the reader 130 can confirm that this mark has been assuredly generated by the reliable package-mark manager, that the embedded information is authentically issued from the exhibitor, whether the embedded information contents are tampered, and when the mark expires, and can read the embedded information contents. The exhibitor 110 may double as handler 120, and may have no WWW server.

The known example 1, while the information wanted to be disclosed/transmitted is being displayed, attaches the mark having the authenticity confirmation information to that information. This embodiment is different from the known example 1 in that it confirms the reliability of the mark generating source or of the contents embedded in the mark.

The package-mark management server 101 is managed, by the package-mark manager 100, to make generation and registration of package-marks. The package-mark management sever 101 generates and registers package-marks in accordance with the request from the exhibitor 110. The marks of only image data used so far have no authenticity because they are easy to be tampered and illegally copied. The package-mark management server 101 as one of the components of the invention can serve to assure the authenticity by associating the marks with the package-mark manager 100 and the exhibitor 110 as the source of having disclosed the embedded information, and managing those marks in the package-mark management DB which will be described later.

The package-mark manager WWW server 102 is managed, by the package-mark manager 100, to display the download picture of the package-mark reference plug-in (program) that the reader 130 needs to refer to the package-marks, and to transmit the Web pages in which information of package-marks is put on view. This server responds to the URL request from the reader terminal 131 to search the Web page management DB which will be described later, transmit the corresponding Web page, and causes the plug-in to be transmitted from the package-mark reference plug-in DB which will be described later.

The exhibitor terminal 111 is the terminal that the exhibitor 110 uses. The exhibitor 110 controls the exhibitor terminal 111 to generate desired information and transmit/receive data to/from the package-mark manager 100.

The exhibitor WWW server 112 is managed, by the exhibitor 110, to transmit the Web page in which detailed information wanted to be embedded in the package-marks and disclosed and the related information are displayed. This server responds to the URL request from the reader terminal 131 that is specified by the link information embedded in the package-mark, to search the Web page management DB308 which will be described later and transmit the corresponding Web page.

The handler terminal 121 is the terminal that the handler 120 uses, and serves to generate the Web page that is to be displayed on the handler WWW server 122.

The handler WWW server 122 is managed, by the handler 120, to transmit Web pages. This server responds to the package-mark attachment request from the package-mark management server 101 to attach the package-marks to the Web page, transmit the Web page with the package-marks attached, and inform the package-mark management server 101 of having completed the attachment.

The reader terminal 131 is the terminal that the reader 130 uses. The reader 130 controls the reader terminal 131 to access to the Web page on the Internet or Intranet.

The displayed image 132 is an example of the Web page with the package-marks attached that is displayed on the reader terminal 131. The displaying mode is not limited to this example, but the package-marks may be attached on the page for exclusive use in which information of goods and service is displayed. The reader terminal 131 is not limited to PC.

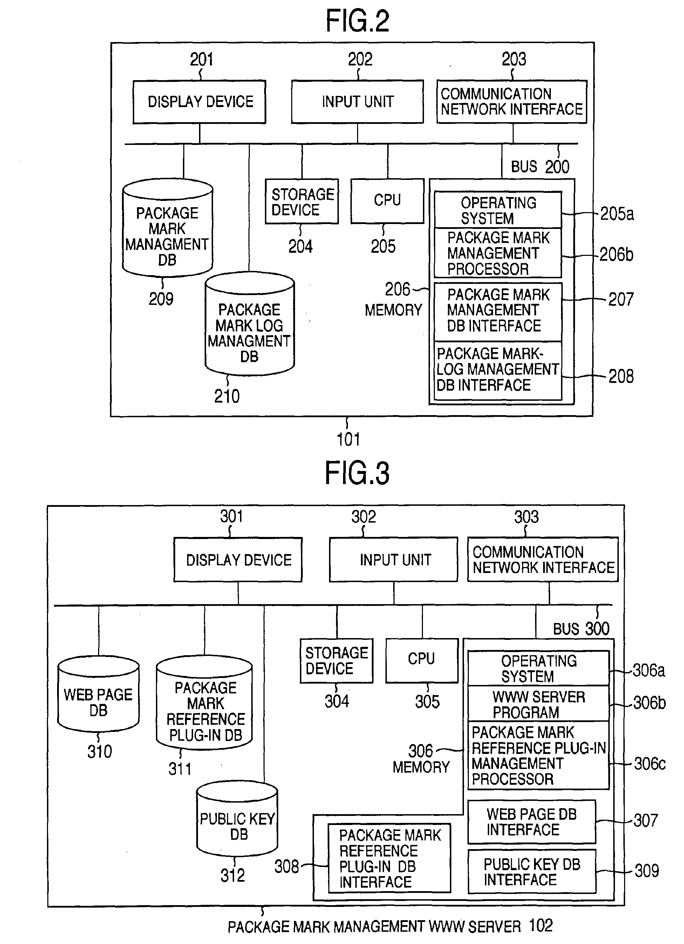

FIG. 2 is a block diagram of the hardware construction of the package-mark management server 101. The hardware construction of the package-mark management server 101, as illustrated in FIG. 2, has a display device 201, an input unit 202, a communication network interface 203, a storage device 204, a central processing unit (CPU) 205, a temporal storage device (memory) 206, a package-mark management DB interface 207, and a package-mark log management DB interface 208 interconnected via a bus 200. In addition, a package-mark management DB209 and a package-mark log management DB210 are connected as external storage devices.

The display device 201 is used to display messages for the package-mark manager 100 who uses the package-mark management server 101. This display device 201 is a CRT or liquid crystal display.

The input unit 202 is used by the package-mark manager 100 who uses the package-mark management server 101 in order to enter data and commands. This input unit 202 is formed of a keyboard, a mouse and so on.

The communication network interface 203 transmits/receives data to/from the exhibitor terminal 111 via the communication network 140.

The storage device 204 is used to perpetually store programs and data for use in the package-mark management server 101. This storage device is formed of a hard disk or floppy disk.

The CPU 205 generally controls each element constituting the package-mark management server 101, and makes various calculations.

The memory 206 is used to temporarily store programs necessary for the CPU 205 to make the above processing, such as an operating system 206a (hereinafter, simply referred to as OS206a) and a package-mark management processor 206b.

Here, the OS206a is the program for executing the function of file management, process management or device management in order to control the whole package-mark management server 101.

The package-mark management processor 206b, when a request for package-mark registration/attachment is sent from the exhibitor terminal 111, makes the processing for confirming if it is an illegal request from a third party. When deciding that it is the registration/attachment, the processor 206b makes the processing for embedding information in the sent package-mark fundamental design or the package-mark fundamental design managed in the package-mark management DB208, the processing for updating the package-mark management DB209 or package-mark log management DB210 on the basis of the information embedding processing, and the processing for transmitting the package-mark attachment request to the handler WWW server 122. When informed of having completed the package-mark attachment from the handler WWW server 122, the processor 206b informs the exhibitor terminal 111, or the request source of having completed the package-mark distribution.

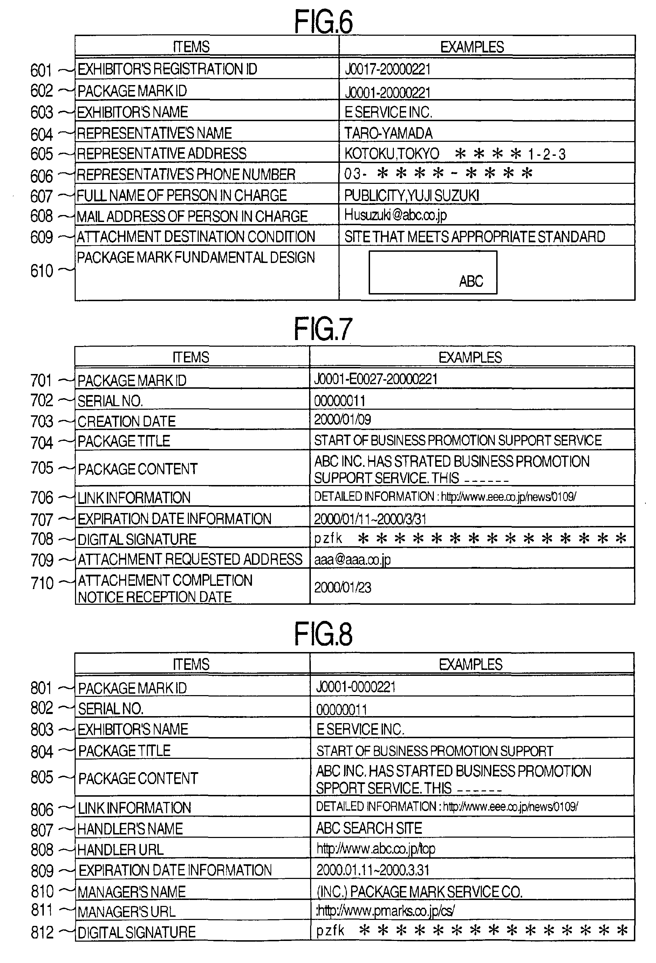

The package-mark management DB interface 207 transmits/receives data to/from the package-mark management DB209. The package-mark management DB209 manages data of exhibitor ID, package-mark ID, fundamental authentication information, public key, and package fundamental design in association with each other as, for example, shown in FIG. 6. In addition, the package-mark management DB209 can be updated by only authorized person.

The package-mark log management DB interface 208 transmits/receives data to/from the package-mark log management DB210. The package-mark log management DB210 is the DB for managing the log information of package-marks, and manages data of package-mark ID, serial NO., and creation date and hour in association with each other as, for example, shown in FIG. 7. The package-mark log management DB210 can also be updated by only authorized person.

FIG. 8 shows the information to be embedded in the package-mark. The technology for embedding particular information in image data is known as "electronic watermark". The "electronic watermark" technology is described in Nikkei Electronics, 1997, vol. 683, pp. 100-107. There are known the invisible watermark for embedding information not to be perceived by human eyes and the visible watermark for embedding information in a form visible by human eyes. The invisible watermark seems to have a limit in the amount of information to be embedded. As to the package-mark, when the reader 130 reads the package-mark design symbolically representing the contents of information embedded in the package mark, even a somewhat changed package-mark design can be read without trouble as long as the information embedded in the package-mark can be identified. Thus, a considerable amount of information can be embedded even when the invisible watermark is employed.

FIG. 3 shows an example of the hardware construction of the package-mark manager WWW server 102.

The package-mark manager WWW server 102 of this embodiment, as illustrated in FIG. 3, includes a display device 301, an input unit 302, a communication network interface 303, a storage device 304, a central processing unit (CPU) 305, a temporary storage device (memory) 306, a Web page DB interface 307, a package-mark reference plug-in DB interface 308, and a public key DB interface 309 interconnected via a bus 300. In addition, a Web page DB310, a package-mark reference plug-in DB311 and a public key DB312 are connected as external storage devices.

The display device 301 is used to display messages for the package mark manager 100 who uses the package-mark manager WWW server 102. This display device 301 is formed of a CRT or a liquid crystal display.

The input unit 302 is used, by the package mark manager 100 who uses the package-mark manager WWW server 102, to enter data and commands. This input unit 302 is formed of a keyboard, a mouse and so on.

The communication network interface 303 transmits/receives data to/from the reader terminal 131 via the communication network 140.

The storage device 304 is used to perpetually store programs and data for use in the package-mark manager WWW server 102. This storage device is formed of a hard disk or floppy disk.

The CPU 305 generally controls each part constituting the package-mark manager WWW server 102 and makes various calculations.

The memory 306 temporarily stores programs necessary for the CPU 305 to make the above processings, such as OS306a, Web server program 306b and package-mark reference plug-in management processor 306c.

Here, the OS306a is a program for executing the function of file management, process management or device management in order to control the whole package-mark manager WWW server 102.

The WWW server program 306b is used to cause the corresponding Web page to be transmitted from the Web page DB310 when an access from the reader 131 occurs.

The package-mark reference plug-in management processor 306c is a program for executing a download process to download the corresponding plug-in and public key when the reader terminal 131 issues a request of downloading the package-mark reference plug-in.

The Web page DB interface 307 is used to transmit/receive data to/from the Web page DB309.

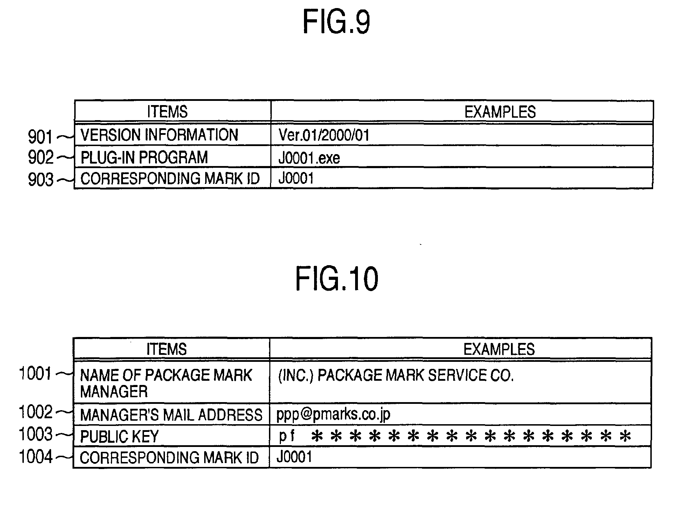

The package-mark reference plug-in DB interface 308 is used to transmit/receive data to/from the package-mark reference plug-in DB311. The package-mark reference plug-in DB311 is used to store the reference plug-in of package-marks and manage data of version information, plug-in program and corresponding mark ID in association with each other as, for example, shown in FIG. 9. The package-mark reference plug-in management DB311 can also be updated by only authorized person.

The public key DB interface 309 is used to transmit/receive data to/from the public key DB312. The public key DB312 is used to store public keys necessary to decode the digital signatures that are embedded in package-marks, and manage data of package-mark manager name, manager mail address, public key and corresponding mark ID in association with each other as, for example, shown in FIG. 10. The public key DB312 can also be updated by only authorized person. When there are a plurality of package-mark service agencies, the opponent public keys are registered in the public key DB312 after confirmation of their existence and rightness.

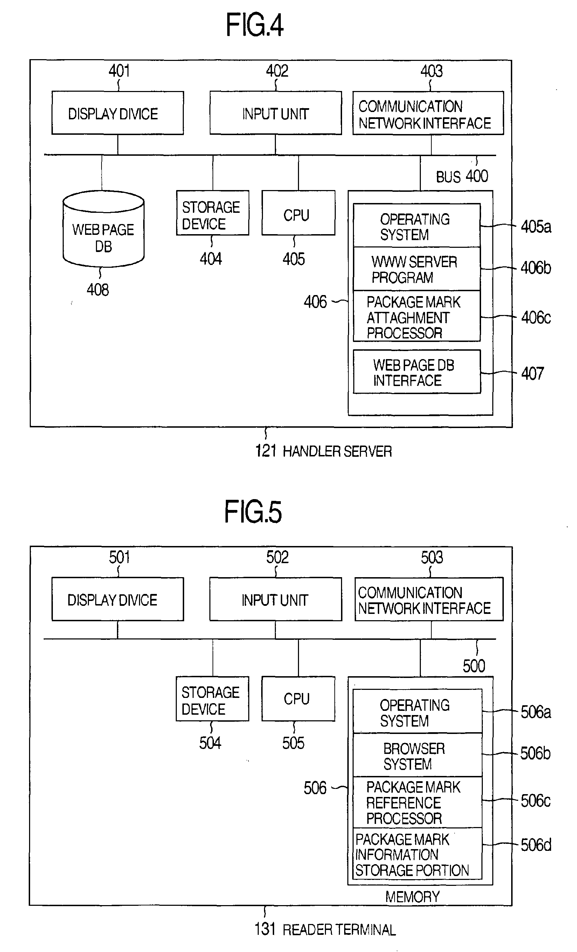

FIG. 4 shows the hardware construction of the handler WWW server 122. The handler WWW server 122 of this embodiment, as illustrated in FIG. 4, includes a display device 401, an input unit 402, a communication network interface 403, a storage device 404, a central processing unit (CPU) 405, a temporary storage device (memory) 406 and a Web page DB interface 407 interconnected via a bus 400. In addition, a Web page DB408 is connected as an external storage device.

The display device 401 is used to display messages for the handler 120 who uses the handler WWW server 122. This display device 401 is formed of a CRT or liquid crystal display.

The input unit 402 is used, by the handler 120 who uses the handler WWW server 122, to enter data and commands. This input unit 402 is formed of a keyboard, a mouse and so on.

The communication network interface 403 is used to transmit/receive data to/from the reader terminal 131 via the communication network 140.

The storage device 404 is used to perpetually store programs and data for use in the handler WWW server 122. This storage device 404 is formed of a hard disk or floppy disk.

The CPU 405 generally controls each part of the handler WWW server 122, and makes various calculations.

The memory 406 temporarily stores programs necessary for the CPU 405 to make the above processings, such as OS406a, Web page generation program 406b and package-mark attachment processor 406c.

Here, the OS406a is a program for executing the function of file management, process management or device management in order to control the whole handler WWW server 122.

The WWW server program 406b executes such processings as to communicate with the handler terminal 121, and store the received Web page in the Web page DB408. In addition, when an access from the reader 131 occurs, this program executes such processing as to cause the corresponding Web page to be transmitted from the Web page DB408.

The package-mark attachment processor 406c, when a package-mark attachment request is sent from the package-mark management server 101, makes package-mark attachment, and after the attachment of the package-mark, executes the sending of an acknowledgement of having completed the attachment to the package-mark management server 101. Also, when a package-mark cancel request is sent from the package-mark management server 101, this processor executes the processing of canceling the package-mark, and after the canceling, performs the processing to inform the package-mark management server 101 of having completed the cancel.

The Web page DB interface 407 is used to transmit/receive data to/from the Web page DB408. The Web page DB408 stores the Web pages with package-marks attached.

FIG. 5 shows the hardware construction of the reader terminal 131. The reader terminal 131 of this embodiment, as illustrated in FIG. 5, includes a display device 501, an input unit 502, a communication network interface 503, a storage device 504, a central processing unit (CPU) 505, and a temporary storage device (memory) 506 connected via a bus 500.

The display device 501 is used to display messages for the reader 130 who uses the reader terminal 131. This display device 501 is formed of a CRT, liquid display or the like.

The input unit 502 is used, by the reader 130 who uses the reader terminal 131, to enter data and commands. This input unit 502 is formed of a keyboard, a mouse and so on.

The communication network interface 503 is used to transmit/receive data to/from the handler WWW server 122 and exhibitor WWW server 112 via the communication network 140.

The storage device 504 is used to perpetually store programs and data for use in the reader terminal 131. This storage device is formed of a hard disk or floppy disk.

The CPU 505 generally controls each part of the reader terminal 131, and makes various calculations.

The memory 506 temporarily stores programs necessary for the CPU 505 to make the above processings, such as OS506a, browser system 506b, package-mark reference processor 506c and package-mark information storage portion 506d.

Here, the OS506a is the program for executing the function of file management, process management or device management in order to control the whole reader terminal 131.

The browser program 506b is used for the reader terminal 131 to communicate with the handler WWW server 122 and exhibitor WWW server 112 and download the Web page.

The package-mark reference processor 506c, when the browser program 506b downloads the Web page with a package-mark and perceives the package-mark, is started and makes the processings of checking if the public key attached to the package-mark matches one of the public keys stored in the package-mark information storage portion 506d, decoding the digital signature embedded in the package-mark by the public key, and checking if the information resulting from decoding by the public key matches the information extracted from the package-mark. If the decoded information does not match the extracted information, the processor 506c displays an error message. In addition, the processor 506c checks if the expiration date of the extracted information matches the clock information of the reader terminal 131. If the term of validity is decided to have expired, the processor 506c makes the processings of displaying an error message, and extracting and displaying the embedded information from the package-mark. Here, the public key may be previously acquired from the package-mark manager WWW server or downloaded at the time of the above processings as in the process flow which will be described later.

The package-mark information storage portion 506d is used to store the public key of the package-mark manager 100 that is obtained when the package-mark reference plug-in (program) is downloaded, and the information extracted by the package-mark reference processor 506c in the reader terminal 131. The package-mark manager's public key data stored has package-mark manager name, manager mail address and public key associated with each other as, for example, shown in FIG. 10.

FIG. 6 is a diagram showing an example of data in the package-mark management DB209 of this embodiment. The data include an exhibitor's registered ID 601, a package-mark ID 602, an exhibitor name 603, an exhibitor's representative name 604, a representative address 605, a representative phone number 606, a name of person responsible 607, a mail address of person responsible 608, an attached destination condition 609, and a package-mark fundamental design 610. These data are stored on the basis of a constant notation standard, or on a uniform notation basis. When a new package-mark is registered or when information such as a name of person responsible is changed, the package-mark management DB209 is updated. Although the example of the package-mark fundamental design shown in FIG. 6 is image data that takes a rectangle shape long sideways, and gradation, the shape and full daub design can have various variations. In addition, it may be moving picture, or animation or have sound added or a combination thereof. In addition, the package-mark fundamental design may be created by the exhibitor 110 or selected by the exhibitor 110 from the fundamental designs that the package-mark manager 100 proposed.

FIG. 7 is a diagram showing an example of data in the package-mark log management DB210 of this embodiment. The data includes a package-mark ID 701, serial NO. 702, a creation date and hour 703, a package title 704, a package content 705, link information 706, expiration date information 707, a digital signature 708, an attachment requested mail address 709, and an attachment completion notice reception date and hour 710. These data are stored on the basis of a constant notation standard, or on a uniform notation basis. The package-mark management server 101 updates the package-mark log management DB210 when the package-mark is created in response to a package-mark distribution request from the exhibitor terminal 111. The attachment completion notice reception date and hour 710 is registered when the attachment completion notice is received from the handler WWW server 122.

FIG. 8 is a diagram showing an example of data of the information to be embedded in the package-mark. The data include a package-mark ID 801, a serial NO. 802, an exhibitor name 803, a package title 804, a package content 805, link information 806, handler name 807, a handler URL 808, expiration date information 809, a manager name 810, a manager URL 811, and a digital signature 812. These data are embedded in the package-mark on the basis of a constant notation standard, or on a uniform notation basis. The digital signature is the encrypted information of the package-mark ID 801 through the manager URL 810. It is assumed that the public key necessary for this signature to be decoded is stored in the public key DB312 and managed by the package-mark manager 100, and that the reader terminal 131 acquires the public key from the reliable package-mark manager WWW server 102. In addition, when the attached destination is not particularly specified, the handler name 807 and handler URL 808 are not necessary. Moreover, when the exhibitor 110 doubles as the package-mark manager 100, the manager name 810 and manager URL 811 can be deleted, and the contact address of the exhibitor 100 may be embedded.

FIG. 9 is a diagram showing an example of data in the package-mark reference plug-in DB311 of this embodiment. The data include version information 901, a program 902, and a corresponding mark ID 903. These data are stored on the basis of a constant notation standard, or on a uniform notation basis.

FIG. 10 is a diagram showing an example of data in the public key DB312 of this embodiment. The data include a package-mark manager 1001, a manager mail address 1002, a public key 1003, and a corresponding mark ID 1004. These data are stored on the basis of a constant notation standard, or on a uniform notation basis.

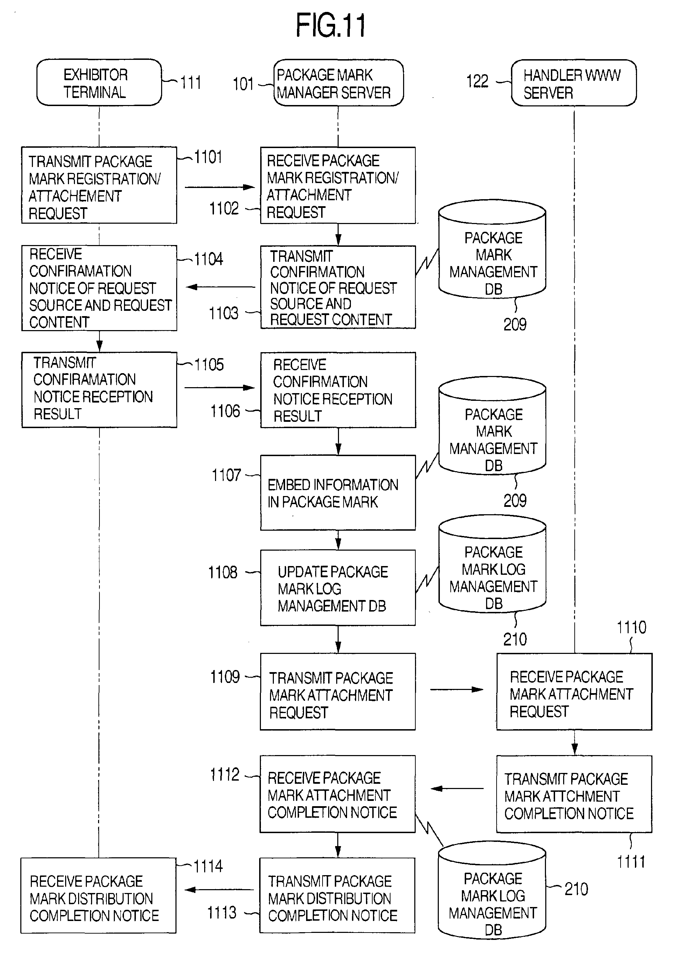

FIG. 11 is a flowchart showing the procedure of the package-mark registration/attachment processing of this embodiment. This package-mark registration/ attachment processing flow makes the package-mark registration/attachment between the exhibitor terminal 111, package-mark management server 101 and handler WWW server 122.

First, the exhibitor terminal 111 transmits to the package-mark management server 101 the package-mark registration/attachment request including the information shown in FIG. 6 such as the exhibitor name and the information desired to be disclosed (step 1101). When the exhibitor 110 tries to make a new registration, the exhibitor 110 as a request source sends identification, or a server certificate obtained from, for example, VeriSign, Inc. and a certificate of representative's seal impression separately. Only when the package-mark manager 100 can confirm the actual existence of the exhibitor 110 and the identical person, the package-mark registration/attachment request can be accepted.

The package-mark management server 101 that has received the package-mark attachment request searches the package-mark management DB209 and checks the registered contents such as contact address of person responsible. Then, it sends a confirmation notice to the exhibitor terminal 111 in order to confirm the request contents and request source (steps 1102, 1103). Here, when a new registration is made, the package-mark manager 100 establishes new exhibitor ID and package-mark ID, and transmits the confirmation notice including these information.

When the exhibitor terminal 111 receives the confirmation notice, the exhibitor 110 checks the contents, and transmits the reception result to the package-mark management server 101 (steps 1104, 1105).

The package-mark management server 101 that received the result of having received the confirmation notice makes the following processings on the basis of the requested contents. It embeds such information as shown in FIG. 8 into the package-mark (steps 1106, 1107), and when the contents newly or normally registered are required to update, it updates the package-mark management DB209. Then, it updates the package-mark log management DB210 (step 1108), and transmits the package-mark with a public key attached and the attachment request to the handler WWW server 122 (step 1109). Here, it is assumed that the handler 120 previously makes a contract with the package-mark manager 100 as the package-mark attachment destination, and that the package-mark manager 100 sends a necessary program to the handler 120 in advance or when the package-mark attachment request is transmitted.

The handler WWW server 122 that has received the attachment request attaches the corresponding package-mark on a predetermined Web page that is previously selected as a place in which the package-mark is attached, and then transmits the attachment completion notice to the package-mark management server 101 (steps 1110, 1111). The package-mark management server 101 that has received the attachment completion notice sends the attachment completion notice to the exhibitor terminal 111, and the exhibitor terminal 111 receives the attachment completion notice, so that the registration/attachment processing ends (steps 1112, 1113, 1114). Here, it is assumed that although the package-mark has the function to control itself to be displayed or not by its expiration date or the like, the package-marks that expired a certain period over its expiry date can be regularly deleted by sending the deletion request from the package-mark manager 130 to the handler 120.

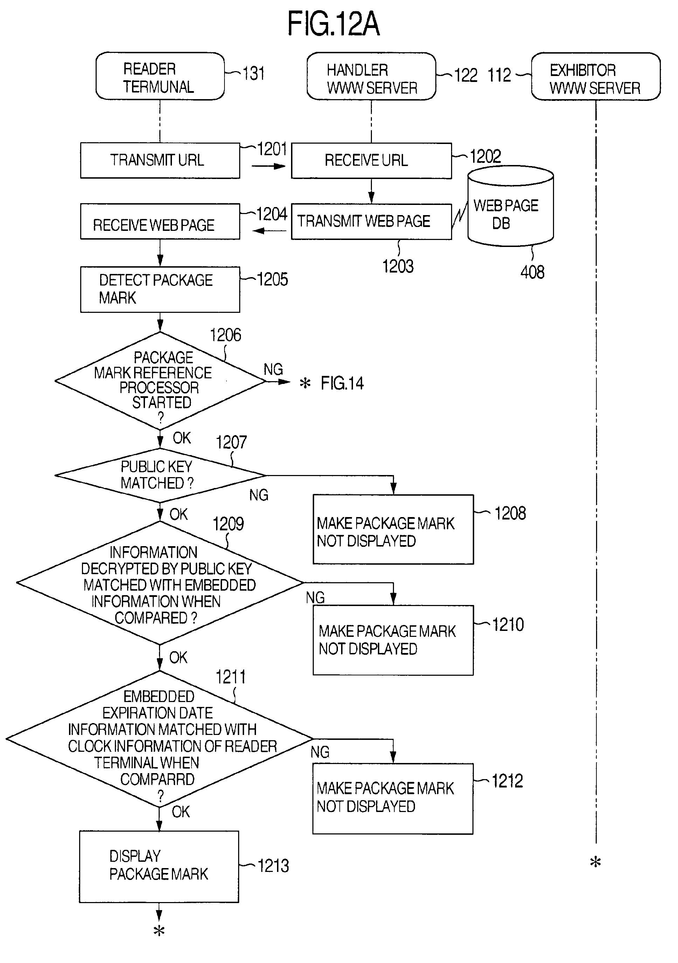

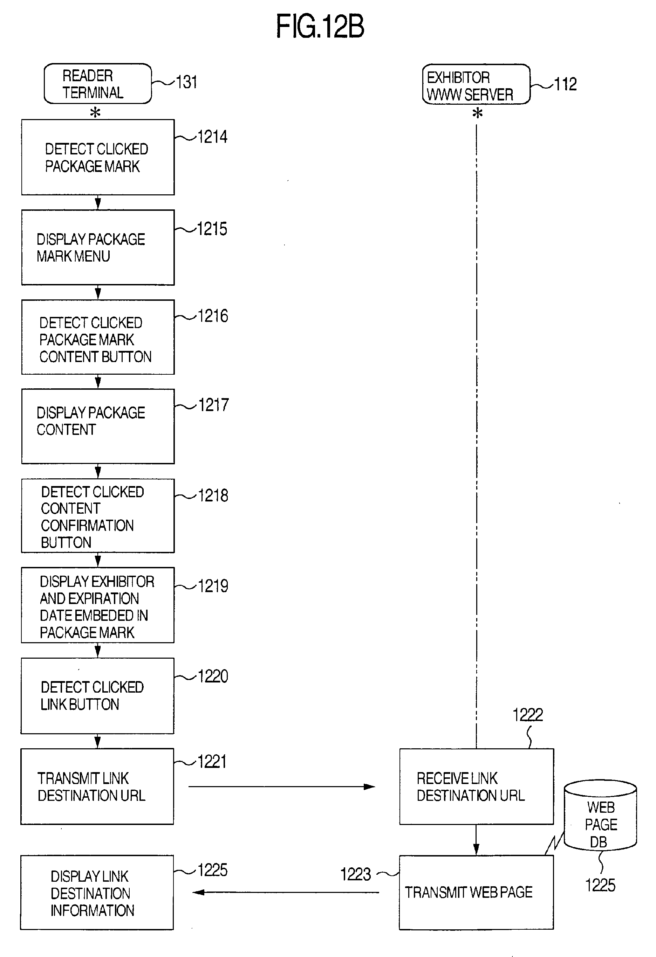

FIGS. 12A and 12B are flowcharts showing the procedure of the package-mark reference processing of this embodiment.

These flowcharts show the operations of the reader terminal 131, handler WWW server 122 and exhibitor WWW server 112 in the case where, after the handler WWW server 122 attaches the package-mark on its Web page, the reader terminal 131 displays this Web page, and the package-mark is referred to by the package-mark reference processor 506c.

First, the handler WWW server 122, when receiving URL from the reader terminal 131, searches the Web page DB409, and the Web page with a package-mark attached to the reader terminal 131 (steps 1201, 1202, 1203).

The reader terminal 131 that has received the Web page with the package-mark attached, when the package-mark reference processor 506c becomes aware of the package-mark (steps 1204, 1205), makes the package-mark reference processor 506c be started (step 1206), and checks if the public key attached to the package-mark matches one of the public keys stored in the package-mark information storage portion 506d (step 1207). If there is no matching, the package-mark is not displayed (step 1208). If it matches, the digital signature information decoded by the public key is compared with the embedded information (step 1209). If any coincidence is not obtained, the package-mark is not displayed (step 1210). If there is a coincidence, the embedded expiration date information is compared with the clock information of the reader terminal 131 (step 1211). If no coincidence is obtained, the package-mark is not displayed (step 1212). If there is a coincidence, the package-mark is displayed like the displayed image 132 in FIG. 1 (step 1213). Here, when the package-mark is not displayed, the corresponding error message may be displayed. In addition, letters such as certification NG may be added to the mark and displayed to change the mark design.

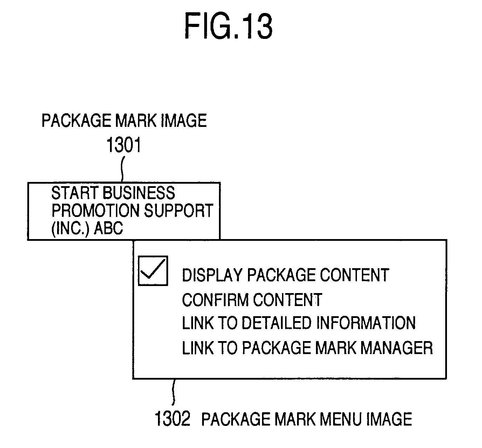

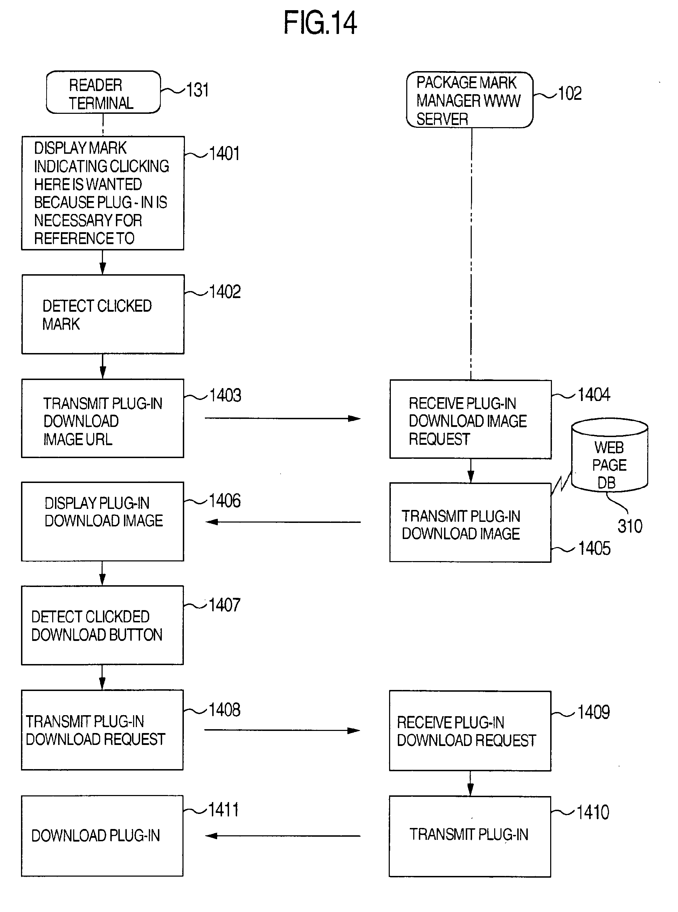

The package-mark, as shown in FIG. 13, is assumed to have the package title 704 shown in FIG. 7, added to the package-mark fundamental design 610 shown in FIG. 6. However, it is not limited to this notation. The procedure in the case where no package-mark reference processor 506c is provided in the reader terminal 131 will be described later with reference to FIG. 14.

When the reader terminal 131 finds the displayed package-mark clicked, it displays the package-mark menu as shown in FIG. 13 (steps 1214, 1215). In addition, when it is found by the reader terminal 131 that the package content display button within the package-mark menu is clicked, it displays the package content 805 shown in FIG. 8 which is embedded in the package-mark (steps 1216, 1217). This package-mark menu image 1302 is an example of the menu, and is not limited to this menu item and this notation.

When the reader 130 who has read the package content clicks the content confirmation button shown in FIG. 13 as will be described later in order to confirm the reliability of the content (about the mark manager, about whether or not it is tampered, and about the expiration date), the reader terminal 131 that has detected this clicking displays the confirmation results of the above processings, such as the exhibitor name 803, package-mark manager name 810 and expiration date 809 shown in FIG. 8 (steps 1218, 1219). The displaying of the content confirmation results may be made by dialog-type text, sound or a combination thereof, that is, it may take any notation.

When the reader 130 who has confirmed the reliability of the package content clicks the more information link button shown in FIG. 13 as will be described later, the reader terminal 131 that detected this clicking transmits the link destination URL (steps 1220, 1221). The exhibitor WWW server 112 that has received this URL searches the Web page DB1225, and sends the corresponding Web page to the reader terminal 131 (steps 1222, 1223). The reader terminal 131 receives this Web page, and displays the information of the exhibitor 110 as the link destination (step 1224).

While the package-mark reference processor 506c automatically makes the content confirmation after detection of package-mark, the content confirmation processing is not automatically made, but may be performed by the order from the reader 130 such as by clicking the content confirmation button of the package-mark. If the results of the content confirmation include any disagreement, it is possible to attach a mark x to the package-mark, to change the mark design or not to display the package content. In addition, while the three comparison processings between the public keys, between the decoded information and embedded information and between the expiration date and terminal clock information are performed for the content confirmation, it is possible that, of these processings, only one processing is automatically made, and the other processings are made under the control of the reader 130. Moreover, while the confirmation of the expiration date information is here performed by comparing with the clock information of the reader terminal, it may be compared with the information of the server that manages the time information on the network.

While the reader 130, after the end of the automatic content confirmation processing, clicks in the order of package content displaying, content confirmation, and link to more information as described with reference to FIGS. 12A and 12B, the order in which the reader clicks is not limited.

While the link destination information is displayed before ending the processings as described with reference to FIGS. 12A and 12B, the link destination image for more information may be an image capable of downloading catalog data of goods and services so that the reader 130 is able to download the catalog data of exhibitor 110 through the package-mark.

When the exhibitor 120 wants to limit the package-mark attachment destination, the URL of the handler WWW server 122 as the attachment destination embedded in the package-mark may be compared with the URL of the Web page with the package-mark attached that is received by the reader terminal 131. If there is no coincidence, the package-mark is not displayed. When the exhibitor 120 does not limit the package-mark attachment destination, the reader 130 may cause the package-marks with which the reader is concerned to be stored in the reader terminal 131 so that when the reader 130 wants to read information, the reader 130 can read the detailed information or related information or download the catalog data on the basis of the link information of the package-marks.

FIG. 13 shows an example of package-mark image. The package-mark image 1301 is the addition of the package title 804 shown in FIG. 8 to the package-mark fundamental design 610 shown in FIG. 6. When the reader 130 clicks this package-mark, the package-mark reference processor 506c of the reader terminal 131 causes a menu image like the package-mark menu image 1302 to be displayed. The link to the package-mark manager leads to the access to the package-mark description and reminder information on the Web page that the package-mark manager WWW server 102 discloses. The present invention is not limited to this menu item.

FIG. 14 is a flowchart showing the procedure in the case where the package-mark reference processor 506c is not provided in the reader terminal 131. This processing flow is executed so that the plug-in and public key necessary for the reference processing of the package-mark can be downloaded between the reader terminal 131 and the package-mark manager WWW server 102 as described below.

First, when receiving the Web page with the package-mark attached that is sent from the handler WWW server 122, the reader terminal 131 displays a mark indicating that clicking here is desired because when there is no package-mark reference processor 506c, plug-in (program) is necessary for reference to the information described in the HTML of the Web page with the package-mark attached and the JavaScript file provided in the handler WWW server 12 (step 1401).

When the reader 130 clicks this mark, the reader terminal 131 that has detected this clicking transmits the URL of the plug-in download description image. The package-mark manager WWW server 102 that has received this URL searches the Web page DB310, and transmits the plug-in download image (steps 1402, 1403, 1404, 1405).

The reader terminal 131 that has received the plug-in download image causes this image to be displayed (step 1406). When it is detected that the reader 130 has clicked the download button (step 1407), the download request is transmitted to the package-mark manager WWW server 102 (step 1408). The package-mark manager WWW server 102 that has received this request transmits the plug-in, so that the reader terminal 131 completes the plug-in download processing (steps 1409, 1410, 1411).

The reader 130 may control the reader terminal 131 to directly designate the URL of the plug-in download image and access to the package-mark manager WWW server 102, thus downloading the plug-in. Moreover, the plug-in may be downloaded from the WWW server of the reliable handler 120 and exhibitor 110, not from the package-mark manager 100. In addition, when there are a plurality of package-mark managers 100, the package-mark managers and public keys are stored in associated with each other and in a uniform notation form within the package-mark information storage portion 506d.

Moreover, the exhibitor 110 desires the package-mark with embedded goods information to be displayed on the Web pages that a plurality of handler WWW servers 122 put on view. In this case, because the reader 130 cannot confirm if a desired product is sold out by only referring to the package-marks on the Web pages that the handler WWW servers 12 put on view, the Web pages that the exhibitor WWW servers 112 put on view may be accessed in order that the reader can confirm if the product is in stock or if a service can be carried out on the basis of the link information embedded in the package-marks.

While the embodiment of the invention described above is an example of the display system for goods and service information, the present invention can be applied to other things. Other embodiments of the invention will be described below.

### Display system for job offer and job hunting information

A display system for job offer and job hunting information will be described as another embodiment of the invention.

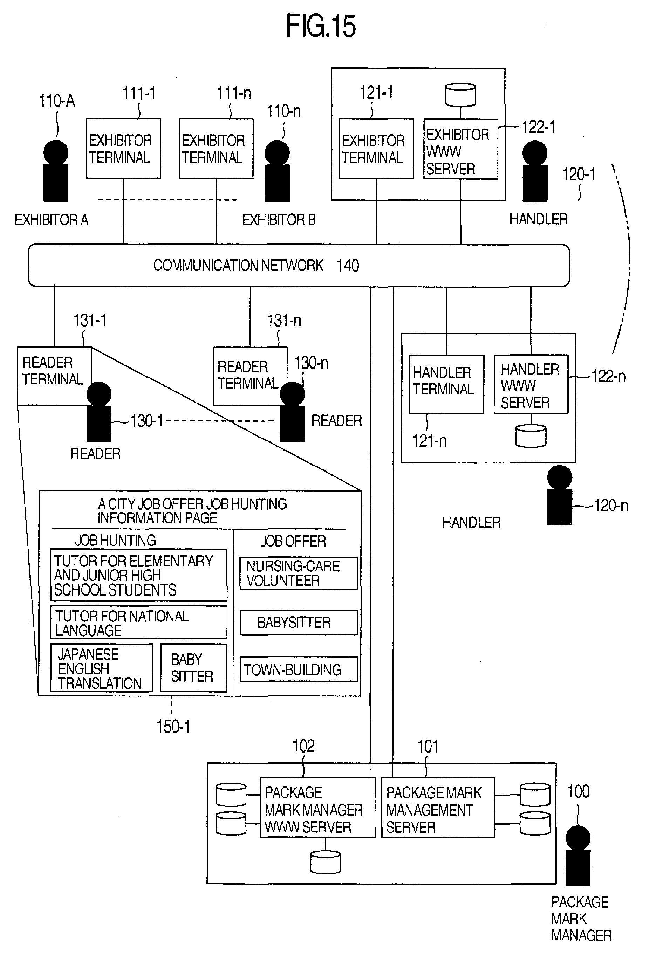

The schematic construction of the display system of this embodiment is fundamentally the same as in FIG. 1. However, since a large number of individuals want to disclose job hunting information, some exhibitors 110 have no WWW server as shown in FIG. 15.

FIG. 15 is a diagram showing the schematic diagram of the system including some exhibitors 110 with no WWW server. The job offer and job hunting information can be displayed like the image 132 shown in FIG. 1 or sometimes displayed on a page for exclusive use like an image 150-1 shown in FIG. 15.

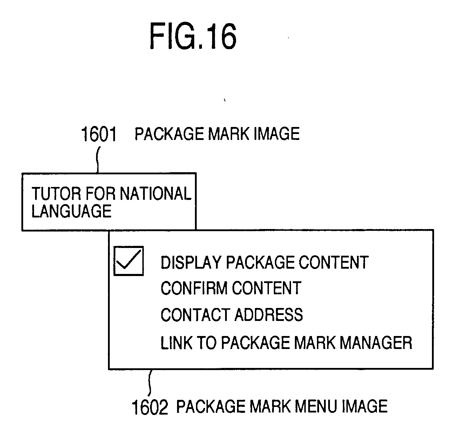

When the information that the exhibitor with no WWW server in FIG. 15 wants to disclose is embedded, buttons for displaying contact address such as the mail address and phone number of the exhibitor, not the link buttons for more information may be provided as shown in FIG. 16. When the exhibitor 110 wants the job hunting information to be displayed on the Web pages of a plurality of handler WWW servers 122, the link button to the package-mark manager WWW server 102 may be provided within the package-mark menu as shown in FIG. 16 in order that the reader 130 associated with a certain Web page can confirm if a desired job has been found on another Web page, and that the job situation, or what the job involves can be checked by the package-mark manager WWW server 102.

FIG. 16 shows the package-mark image of this embodiment. The package-mark image 1601 is an example of image, and the package-mark menu image 1602 is an example of menu. The package-mark image and menu are not limited to these images, menu items and notation.

The operation flow of this system is fundamentally the same as in FIGS. 11 and 12A-12B and 14. However, since the information involving the career and contact address of the individual, or the exhibitor like the job hunting information is not wanted to disclose to an unspecified number of anonymous readers 130, the system may be constructed so that the reader 130 cannot acquire the package-mark reference plug-in unless he sends his ID and registers. When there is the information that is wanted to be disclosed to only the persons in charge of human affairs in business enterprises, the system may be set so that the package-mark contents can be displayed only when the reader 130 is any one of the persons in charge of human affairs in business enterprises. This access condition (for example, reader's attribute information that can be read) is embedded into the package-mark in place of the expiration date information 809 shown in FIG. 8, and the reader's attribute information is stored in the package-mark reference plug-in distributed to the reader terminal 131. The access condition embedded in the package-mark is compared with the reader's attribute information. If there is no coincidence, the package contents embedded in the package-mark are not displayed or are made illegible. This method is not limited to the displaying of job offer and job hunting information, but can be applied widely to the case where it is wanted to somewhat controllably display the information embedded in the package-mark with some private information involved such as the displaying of purchase and sale information between individuals and recruitment information for hobby group members. This method can be considered useful in that the handler wants to display and disclose more information and to get reader's attention, while the exhibitor wants to display information for a large number of readers with good references.

### Display system for information having vendibility

A display system for information having some vendibility such as currency and point will be described as another embodiment of the invention.

Recently, a currency called "eco-money" that is not legal currency of a country, but has a particular vendibility according to a local rule in a locality or the like has begun to be used in a local area. In addition, a structure having vendibility and using other unit than legal money has been widely used, such as the point system in shopping areas that is not money, but can be converted into money later and bartered with goods. When these currency and point having some vendibility are used on a network, it is important that they be made not only digitally countable but also visible for easy discrimination in order to use a plurality of currency units at the same time, and that their structure or system and their owners be confirmed. This invention is useful for the application to that system.

The schematic structure of the display system of this embodiment is fundamentally the same as in FIG. 15. However, in this system, the exhibitor 110 does not necessarily need the WWW server.

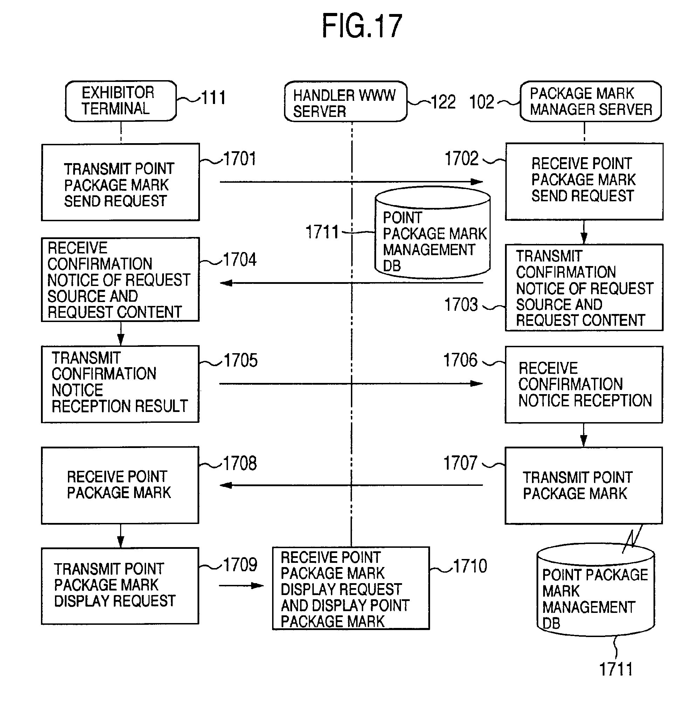

The processing of this embodiment is fundamentally the same as in FIGS. 12A-12B, and 14. However, it is sometimes different, and the operation flow for the mark attachment processing will be described with reference to FIG. 17. Here, it is assumed that at least one exhibitor 110 exhibits what has some vendibility that is different from the currency of a country and has some vendibility unique in a district (hereinafter, called "point package-mark") on the Web page of the handler WWW server 122 so as to make a trade of this point package-mark for nursing-care volunteer. In addition, the exhibitor 110 previously worked as a volunteer and got a point package-mark that can be exchanged with other goods or service in the area in which the exhibitor 110 abides in accordance with its point number.

First, the exhibitor terminal 111 transmits a point package-mark send request including the exhibitor name and necessary point number to the package-mark management server 101 (step 1701). The package-mark management server 101 that has received the point package-mark send request searches a point package-mark management DB1711, and checks if the information of the request source matches any one of the owner information and point number of the stored point package-marks. Then, the server 101 generates a confirmation notice of the request source and request contents based on the information stored in the point package-mark management DB and sends it to the exhibitor terminal 111 (steps 1702, 1703, 1704).

The exhibitor terminal 111 that has received the confirmation notice transmits the confirmation notice received result to the package-mark management server 101 (step 1705). The package-mark management server 101 that has received this result embeds the point number and digital signature of the request content into the point package-mark and updates the point package-mark management DB1711. Then, the server 101 adds a public key to the point package-mark and transmits it to the exhibitor terminal 111 (steps 1706, 1707).

The exhibitor terminal 111 that has received the point package-mark transmits the display request of the point package-mark and job offer information to the handler WWW server 122. The handler WWW server 122 receives this request, and displays those information (steps 1708, 1709, 1710).

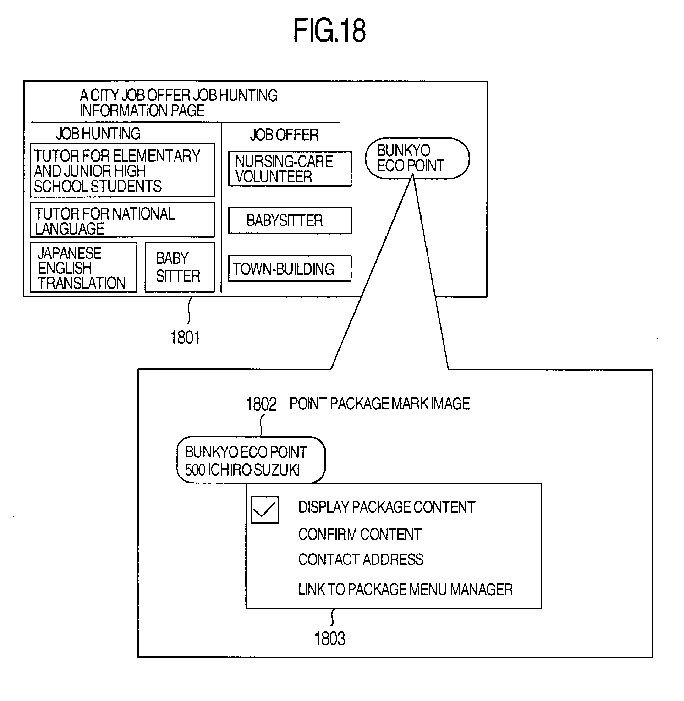

The operation flow of the point package-mark reference processing is fundamentally the same as in FIGS. 12A and 12B. However, as described clearly in FIGS. 12A and 12B, the procedure and mark design form are not limited. FIG. 18 shows an example of the image of the point package-mark. The point package-mark has a design being symbolic of the information embedded in the point package-mark, such as the kind of currency having some vendibility, its point number and owner, as shown by a point package-mark image 1802. The reader terminal 131 displays a Web page with the point package-mark attached as shown by an image 1801. If it detects that the point package-mark has been clicked, it displays a menu like a point package-mark menu image 1803. The point package-mark menu image 1803 is an example of menu, and is not limited to these menu items and notation. When the publisher information of mark such as revenue stamp and coupon comes into question, the publisher information may be added to the menu items.

Such a flow as to send the point package-mark to the reader terminal 131 from the package-mark management server 101 and to send a request for displaying the package-mark from the reader terminal 131 to the handler WWW server 122 is not limited to the example of the point package-mark, but may be used in the other embodiments for package-mark.

### Display system for data in the case where the reader doubles as the handler and exhibitor

A description will be made of, as another embodiment, a data display system in which the reader does not refer to the Web page disclosed by the handler 120, but acquires the package-mark by use of other separate means, and the reader 130 itself generates the package-mark and reads.

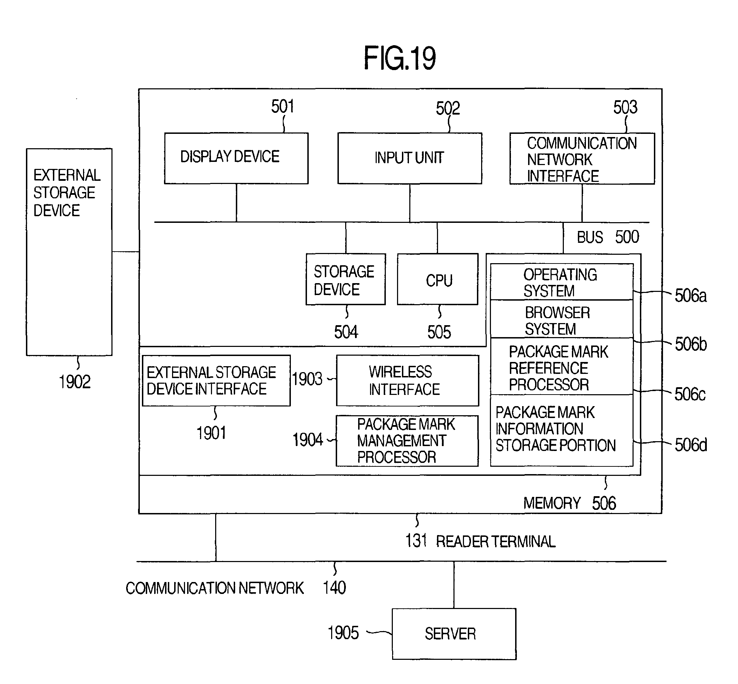

FIG. 19 shows the schematic construction of the system of this embodiment. This construction is fundamentally the same as in FIG. 5. However, an external storage device interface 1901 may be provided which transmits/receive data to/from an external storage device 1902 so that it can obtain the package-mark from the external storage device such as FD, CD-ROM, and DB. A wireless network interface 1903 may be provided so that the package-mark can be obtained by way of radio. The package-mark can be obtained from a server on the communication network 140. In addition, a package-mark management processor 1904 may be stored in the memory 506 so that the reader 130 himself can create the package-mark.

An example of data of the information that the exhibitor 110 embeds in the package-mark is fundamentally the same as in FIG. 8. However, when the reader 130 directly acquires the package-mark from the exhibitor 110 by way of storage media such as FD, server or radio, the contact address information of the exhibitor 110 may be selected as a data item in place of the handler name 807 and handler URL 808. Moreover, when the exhibitor 110 does not request the package-mark manager 100, but creates the package-mark by himself, the manager name 810 and manager URL 811 may be omitted.

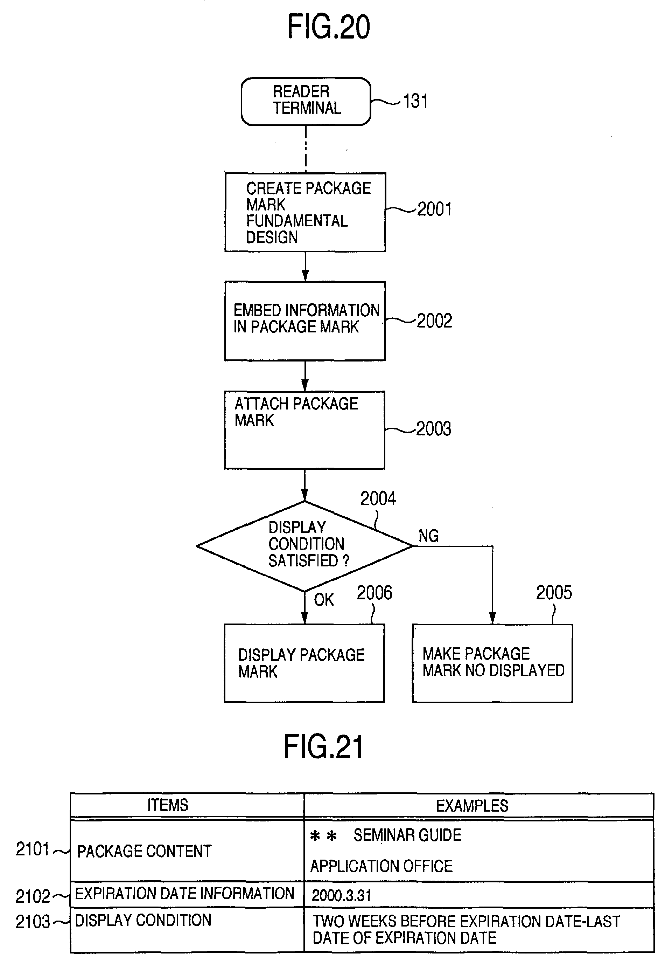

FIG. 20 shows the processing flow for the reader 130 to embed the acquired event information or the like in the package-mark and use it. First, the reader terminal 131 creates a basic design of the package-mark that images the title of the information to be embedded or the like (step 2001). The information desired to be embedded and the information necessary for controlling the displaying of this information are embedded in this basic design by use of a package-mark management processor 1904 (step 2002). Here, although the data example of the information to be embedded in the package-mark is fundamentally the same as in FIG. 8, the information associated with the exhibitor 110, handler 120 and package-mark manager 130 may be omitted. In addition, if the reader 130 wants to select only the expiration date information as the information display control condition, data item information such as a package content 2101, expiration date information 2102 and a display condition 2103 may be embedded in the package-mark as shown in FIG. 21. After the information necessary for the package-mark is embedded, the package-mark is attached to the Web page stored in the memory 506 of the reader terminal 131 (step 2003). The reference processing flow is fundamentally the same as in FIGS. 12A and 12B. However, when the package-mark is acquired not by referring to the Web page, but by other method mentioned above, data transmission and reception to and from the handler WWW server 122 or exhibitor server 112 may be omitted. Moreover, the displaying may be controlled according to a display condition that a mark is indicated when it becomes two weeks before the expiration date. In this case, the date information that the package-mark reference processor 506c calculates on the basis of the expiration date information and display condition embedded in the package-mark is compared with the clock information of the reader terminal 131 (step 2004). If there is no coincidence, the package-mark is not displayed (step 2005). If they matches, the package-mark is displayed (step 2006).

Thus, if the expiration date of some information is tried to confirm, the Web page with the package-mark attached may be displayed open on the reader terminal 131 when the browser system 506b is started.

### Display system for data on mobile terminal

A description will be made of a display system for data on a mobile terminal such as cellular telephone as another embodiment of the invention.

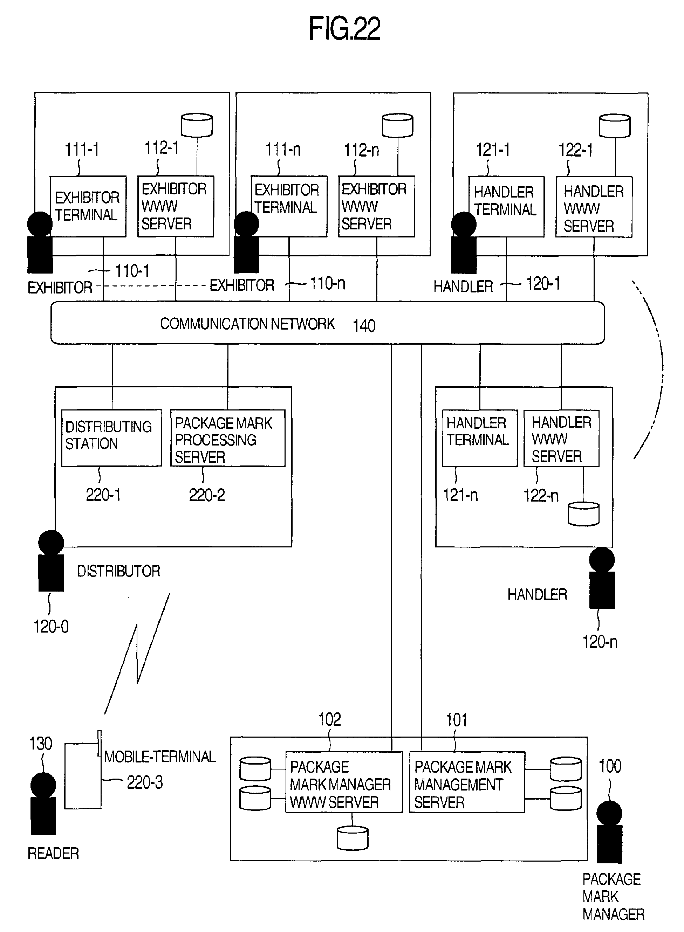

FIG. 22 shows the schematic construction of the system of this embodiment. This system is fundamentally the same as in FIG. 1. However, this embodiment is different in that an information distributor 2200 is provided which collects the Web pages disclosed by the handler WWW server 122 and distributes them to mobile terminals. The information distributor 2200 manages an information distribution station 2201 for distributing information to mobile terminals 2203 that the reader 130 owns, and a package-mark management server 2202 for confirming the contents of the package-mark before the information is distributed.

The processing flow for the package-mark in this embodiment is fundamentally the same as in FIGS. 11, 12A and 12B. However, in the reference processing flow, the processing for confirming the reliability of the package-mark such as checking of public keys, checking if the information decoded by a public key matches the embedded information and checking if the embedded expiration date information matches the clock information of the reader terminal, which those processings are made by the reader terminal 131 as described with reference to FIG. 12, may be performed by the package-mark management server 2202 that the information distributor 2200 manages. Moreover, the mobile terminal 2003 that has received the package-mark after being processed for the above reliability checking may have display control means that controls the package-mark to be displayed on the screen of the mobile terminal while the expiration date is not reached.

A provider that makes Internet connection service may perform the reliability checking of the package-mark as does the above-mentioned information distributor 2200, and transmits the package-mark after being processed for the reliability check to the reader terminal 131 that made a contact with the provider.

In addition, an e-mail may be attached with the package-mark, and sent to the reader terminal 131. The e-mail may be transmitted via radio or the communication network 140.

### A display system for the information present in a plurality of sites and servers

A description will be made of a display system for displaying diversified information over a plurality of sites and servers as another embodiment of the invention.

A general method of displaying the information over a plurality of related sites is a collection of links. However, when referring to a collection of links, we often found that the same collection of links as that of the link source was not displayed on the link destination page. Therefore, in order to refer to the information on a plurality of sites by clicking a collection of links, it is necessary to many times back to the site in which the collection of links is displayed by the browser function, thus it taking a lot of trouble so that the user cannot have feeling of integration of information associated with the collection of links and create a brand image. In addition, since the user cannot easily understand, depending on the contents of the linked pages, by what manager or representative the linked site is run or what the main purpose of the linked site is, the reliability of the collection of links cannot be established.

Thus, it is important to make it possible to easily access the related information that are deconcentrated over a plurality of sites or servers, and to confirm the senders of the information. The present invention is useful for the application to the above structure.

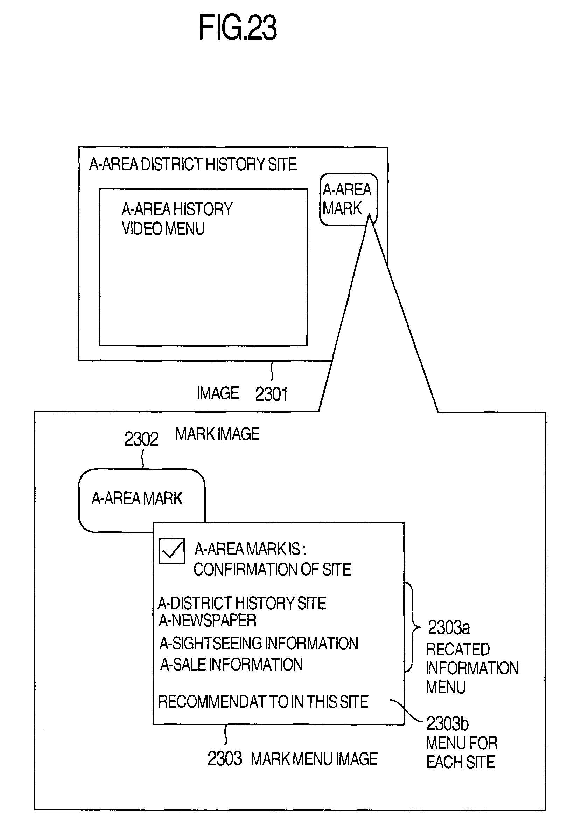

The schematic construction of the information display system of this embodiment is fundamentally the same as in FIG. 1. In addition, the processing in this embodiment is fundamentally the same as in FIGS. 12A, 12B and 14. Although the information to be embedded in the mark has fundamentally the same data format as in FIG. 8, setting up of a plurality of link destinations can be made by providing a plurality of link information 806. Moreover, the displayed image is as for example shown in FIG. 23.

FIG. 23 shows an image 2301 having an example of mark such as "A-area mark" attached to a plurality of sites for providing information associated with a particular district called A-area, a mark image 2302, and a mark pull-down menu image 2303. The mark pull-down menu format of this embodiment is fundamentally the same as in FIG. 13, but is different in that a large number of menu items that enable related information to be accessed are provided, for example, like a related information menu 2303a. The link destination of related information may be a separate site, another page of the same site as that with mark attached, an advertisement page that a plurality of sites share, and a page in which a collection of links is displayed. In addition, even the marks of the same kind may enable recommendable information in each site to be accessed, or even the menu items of the same name may be set up to link to different pages of sites, for example, like an each-site menu 2303b. In this case, selection of the same "recommendation of this site" item can cause the user to access the corresponding link destination of each site by providing link information different at each site with the mark attached.

In addition, in the pull-down menu, there can be set up items that not only can be linked to -a page of the site, but also can download multimedia data other than HTML document text, such as video information and PDF from an arbitrary server to the reader terminal 1311, and automatically display the downloaded data, or items that can acquire coupon and propose a purchase.

Moreover, this embodiment may be set up so that the mark itself can be downloaded to the reader terminal 131-1 without setting up the reliability confirmation function in the site.

As described above, the application of this invention will thus enable the related information over a plurality of sites or servers to create a feeling of integration, the related information to be easily accessed and the related sites to be confirmed in their reliability.

Thus, the exhibitor is able to display with high reliability the information that are wanted to be disclosed and transmitted in order that a large number of readers can read those information by use of multimedia data having the wanted-to-disclose-and-transmit information embedded therein and which has such elements as to symbolically represent the contents of the above information, and has access means for accessing to the authenticity confirmation means, expiration date confirmation means and related information. Furthermore, use of the multimedia data will enable the reader to read highly reliable information by using such a method as to reduce the communication load, and enable the handler to control information to be displayed by using a method of reducing running load.

## Claims

1. A data display method comprising the steps of:
receiving, by a data terminal (e.g., 131), multimedia data (e.g., 1301) having embedded therein data (e.g., FIG. 8) that includes first information (e.g., 804-806) to be disclosed, and second information (e.g., 809) for controlling said data (e.g., FIG. 8) to be disclosed, said multimedia data symbolically representing the contents of said embedded data;
comparing said second information included in said received multimedia data with a condition on said data terminal side; and
making at least part of said multimedia data or said first information invisible or illegible on said data terminal on the basis of a result of the comparison of said second information.

2. A method according to claim 1, wherein said embedded data includes third information (e.g., 812) for confirming reliability of said embedded data, and said method further comprising the steps of:
comparing said third information included in said received multimedia data with the condition on said data terminal side; and
making said multimedia data and said first information invisible on said data terminal if said embedded data is decided not to have much credibility on the basis of a result of the comparison of said third information.

3. A method according to claim 1 or 2, wherein said embedding of said data in said multimedia data is performed by electronic watermark technique.

4. A method according to claim 1, wherein said second information is information representing an expiration date (e.g., 809) of said multimedia data, and said comparison of said second information is performed so that said data terminal can decide if present time is within said expiration date by comparing said second information with the present time on said data terminal side.

5. A method according to claim 2, wherein said data terminal has a public key of a management server (e.g., 101) for managing said multimedia data, said third information (e.g., 812) results from encrypting said embedded data by use of a secret key of said management server, and said comparison of said third information is performed so that said data terminal can decide if said embedded data has much credibility by decrypting said third information by said public key and comparing the decoded data with said embedded data.

6. A method according to claim 1, wherein said first information includes outline information (e.g., 805) briefly showing a content of said embedded data, and whereabouts information (e.g., 806) showing a location of detailed information of said embedded data, said outline information and said whereabouts information are displayed on said data terminal in response to an input to said multimedia data when said multimedia data is displayed on said data terminal, and said detailed information is displayed on said data terminal in response to an input to said displayed whereabouts information.

7. A data terminal (e.g., 131) comprising:
a receiving portion (e.g., 503) for receiving multimedia data (e.g., 1301) having embedded therein data (e.g., FIG. 8) that includes first information (e.g., 804-806) to be disclosed, and second information (e.g., 809) for controlling said data (e.g., FIG. 8) to be disclosed, said multimedia data symbolically representing a content of said embedded data;
a processor (e.g., 505) for comparing said second information included in said received multimedia data with a condition on said data terminal side; and
a display device (e.g., 501) capable of displaying said multimedia data and said first information, said processor making at least part of said multimedia data or said first information invisible or illegible on said data terminal on the basis of a result of the comparison of said second information.

8. A data terminal according to claim 7, wherein said embedded data includes third information (e.g., 812) for confirming if said embedded data has credibility, and said processor compares said third information included in said received multimedia data with the condition on said data terminal side and, if said embedded data is decided not to have credibility as the result of the comparison of said third information, makes said multimedia data and said first information invisible on said display device.

9. A data terminal according to claim 7 or 8, wherein said embedding of said data in said multimedia data is performed by use of electronic watermark technique.

10. A data terminal according to claim 7, wherein said second information is information representing an expiration date (e.g., 809) of said multimedia data, and said comparison of said second information is performed in such a manner that said processor compares said second information with present time on said data terminal side, thereby deciding if the present time is within the expiration date.

11. A data terminal according to claim 7, wherein said data terminal further comprises a storage device for storing a public key of said management server (e.g., 101) for managing said multimedia data, said third information (e.g., 812) is said embedded data that has already been encrypted by use of a private key of said management server, and said comparison of said third information is performed such that said processor decrypts said third information by use of said public key and compares said decoded data with said embedded data, thereby deciding if said embedded data has credibility.

12. A data terminal according to claim 7, wherein said first information includes outline information (e.g., 805) briefly showing the content of said embedded data and whereabouts information (e.g., 806) for showing a location of detailed information of said embedded data, said processor controls said display device to display said outline information and said whereabouts information in response to an input to said multimedia data when said multimedia data is displayed on said display device, and controls said display device to display said detailed information in response to an input to said displayed whereabouts information.

13. A data display system comprising at least one client terminal having information wanted to disclose, at least one management server for managing multimedia data having such elements as to symbolize a content of said information, at least one WWW server for putting said multimedia data on view, and at least one client terminal for reading said multimedia data,
said management server having means for embedding said desired-to-disclose information and a digital signature in said multimedia data when receiving a request from said client terminal having said desired-to-disclose information, and means for attaching a public key to said multimedia data and sending it to said WWW server,
said WWW server having means for attaching said multimedia data to a Web page and sending said Web page with said multimedia data,
said client terminal having means for acquiring from said management server said management server's public key and a program necessary for referring to said multimedia data, and storing them, means for acquiring said Web page with said multimedia data from said WWW server, means for comparing said public key attached to said multimedia data with said public key acquired from said management server and stored, means for making said multimedia data not displayed or said information embedded in said multimedia data not displayed if there is no coincidence in said comparison, and means for making said multimedia data displayed or said information embedded in said multimedia data displayed if they matches each other.

14. A data display system having at least one client terminal for reading information, said client terminal including means for embedding desired-to-read information and display conditions of said desired-to-read information in multimedia data having elements that symbolize said desired-to-read information, means for making said multimedia data not displayed or the content of said desired-to-read information not displayed if there is no coincidence about said display conditions, and means for making said multimedia data displayed or the content of said desired-to-read information displayed if there is a coincidence about said display conditions.

15. A data display system according to claim 13 or 14, wherein if said information embedded in said multimedia data and said information decrypted by use of said public key are not coincident with each other when they are compared, said multimedia data is not displayed or the design of said multimedia data is changed in its form or said information embedded in said multimedia data is not displayed, and if they match each other, said multimedia data is displayed or said information embedded in said multimedia data is displayed.

16. A data display system according to claim 13 or 14, wherein if the present time is decided to be over the expiration date when the expiration date of said information embedded in said multimedia data and the clock information of said client terminal are compared, said multimedia data is not displayed or the design of said multimedia data is changed in its form or said information embedded in said multimedia data is not displayed, and if the present time is decided to be within said expiration date, said multimedia data is displayed or said information embedded in said multimedia data is displayed.

17. A data display system according to claim 13 or 14, wherein said exhibitor discloses/transmits information by use of said multimedia data having means by which said reader can acquire the detailed information and related information on the basis of whereabouts information embedded in said multimedia data.

18. A data display system according to claim 13 or 14, wherein a program necessary for displaying said information embedded in said multimedia data is limited in it distribution in order to control said embedded information to be displayed in accordance with the access control condition of the information embedded in said multimedia data, or said program necessary to display said information embedded in said multimedia data that has said access condition already embedded therein has the attribute information of said reader provided in order to decide if said access condition is satisfied, and said access condition embedded in said multimedia data and said attribute information of said reader are compared with each other so that if there is no coincidence, said information embedded in said multimedia data is not displayed, and that if they match each other, said information embedded in said multimedia data is displayed.

19. A data display system having at least one information distribution station for distributing information and at least one information processing terminal for reading the information embedded in multimedia data or said information after the processing of reliability confirmation of said multimedia data, wherein said station distributes said multimedia information, which has such elements as to symbolize a content of said information, reliability confirmation means and display control means, to said information processing terminal, and said information processing terminal displays said multimedia or said information embedded in said multimedia data.

20. A data display method comprising the steps of:
displaying on a display device a Web page having set up therein link information to a mark manager side that manages a mark for authenticating said Web page together with said mark for certifying said Web page that said mark manager side apparatus manages;
sending a request for confirming authenticity of said Web page to said mark manager side apparatus determined by said link information set up in said Web page when an operator selects said mark displayed together with said Web page on said display device; and
controlling said mark to be controlled on the basis of display data included in said mark.

21. A recording medium having a program stored to be used in a data display system and that can be read by a computer, said program including the steps of:
receiving, by a data terminal (e.g., 131), multimedia data (e.g., 1301) that has embedded therein data (e.g., FIG. 8) including first information (e.g., 804-806) to be disclosed, and second information (e.g., 809) for controlling said data to be displayed, said multimedia data symbolically expressing the content of said embedded data;
comparing said second information included in said received multimedia data with the condition on said data terminal side; and
making at least part of said multimedia data or said first information not displayed or illegible on said data terminal according to the result of said comparison of said second information.

22. A method according to claim 1, wherein said multimedia data or said first information is displayed on said data terminal on the basis of another result of the comparison of said second information.

23. A data terminal according to claim 7, wherein said multimedia data or said first information is displayed on said data terminal on the basis of another result of the comparison of said second information.
